# EUROPEAN PATENT APPLICATION

(11) **EP 2 924 076 A1**
(43) Date of publication of application: **30.09.2015**
(21) Application number: 14161269.7
(22) Date of filing: 24.03.2014
(51) Int. Cl.: C09B 61/00, C09B 67/54

(54) **Method for preparing a purified madder root extract**

(71) Applicant: Rubia Exploitatie B.V., 5223 DE 's Hertogenbosch (NL)
(72) Inventor: Derksen, Goverdina Christina Helena, 4651 RZ Steenbergen (NL); Mattheussens, Eric Simon Gabriel Maria, 4651 RZ Steenbergen (NL)
(74) Representative: Hesselink, Dinah Elisabeth

(57) **Abstract**

The invention pertains to a method for preparing a purified madder root extract comprising the steps of providing a madder root extract comprising one or more contaminants selected from rubiadin and lucidin with a pH of at least 8, contacting the extract with a polystyrene-based resin, and recovering an extract from which contaminants selected from rubiadin and lucidin have been removed at least in part.

It has been found that by the method according to the invention rubiadin and lucidin can be effectively removed from a madder root extract.

## Description

The present invention relates to a method for preparing a purified madder root extract, in particular a madder root extract from which mutagenic contaminants are removed in high yield.

The root of the madder plant (Rubia tinctorum L.) contains various dye compounds, one of which is alizarin or 1,2-dihydroxyanthraquinone. Alizarin occurs in the fleshy roots as its glycoside, ruberythric acid. The roots have long been a major source of the alizarin dye until it was discovered in 1868 that alizarin can also be chemically synthesized. The chemical synthesis is however becoming more and more expensive and is less desirable from an environmental point of view. Therefore, the madder root, which is a renewable resource, is again considered as a useful alternative for the preparation of the dye.

The roots in themselves contain only minor amounts of the dye alizarin. For the formation of alizarin, it is necessary to hydrolyse ruberythric acid, i.e. cleave off the disaccharide group. The roots in addition comprise another glycoside, namely lucidin primeveroside, which contains the same disaccharide as ruberythric acid. During hydrolysis, lucidin can be formed out of lucidin primeveroside. Lucidin is, however, a known mutagenic agent.

EP1191070 describes a method for producing a dye preparation from madder root, comprising contacting ground madder with water and oxygen at a temperature below 70°C for a certain period of time. It has been found that under these conditions enzymes in the madder root convert lucidin primeveroside to non-mutagenic nordamnacanthal rather than to mutagenic lucidin.

However, it has been found that madder root extracts also comprise a further mutagenic compound, namely rubiadin. To obtain a madder root extract which is suitable as a dye preparation, it is necessary to also remove rubiadin from the madder root extract. There is therefore need for a process which can effect this.
Additionally, it would also be desirable to have a process which can remove lucidin, the combination of lucidin and rubiadin from a madder root extract.
The present invention provides such a process.

The present invention pertains to a method for preparing a purified madder root extract comprising the steps of providing a madder root extract comprising one or more contaminants selected from rubiadin and lucidin with a pH of at least 8, contacting the extract with a polystyrene-based resin, and recovering an extract from which contaminants selected from rubiadin and lucidin have been removed at least in part.

It has been found that by the method according to the invention rubiadin and lucidin can be effectively removed from a madder root extract. More specifically it has been found that it is possible to remove at least 80%, in particular at least 90%, more in particular at least 95%, or even at least 98%, or even more, from of rubiadin and/or lucidin from a madder root extract (percentages calculated from the amount of compound remaining in the extract before or after the adsorption step, with the amount before the adsorption step being set at 100%).
In this context it should be noted that madder root extract contains numerous compounds which have a structure which is closely related to that of rubiadin and lucidin, some of which are present in much higher concentrations. More specifically the madder root extract comprises large amounts of alizarin, which is a key coloring compound in the dye extract. It is surprising that the use of a polystyrene-based resin results in the effective removal from rubiadin and/or lucidin in the presence of large amounts of these related compounds. Therewith, the process according to the invention makes it possible to efficiently remove the mutagenic compounds rubiadin and lucidin from a madder root extract.

In the process according to the invention a madder root extract is contacted with a polystyrene-based resin. Polystyrene-based resins are known in the art. They are based on polymerized styrene, a compound which is also known as vinyl benzene. To give the polymer a more stable structure, divinyl benzene is often incorporated into the polystyrene resin to effect crosslinking.
It may be preferred for the polystyrene-based resin used in the present invention to be based for at least 70 mol.% on the total of vinyl benzene monomers and, if present, divinyl benzene monomers, preferably at least 80 mol.%, more preferably at least 90 mol.%. The percentages are calculated on the chemical structure of the resin.

The polystyrene-based resin may be an ion exchange resin, which has been provided with ionic groups. This is, however, not necessary, and generally not preferred, for the process according to the invention. In one embodiment, the polystyrene-based resin used in the present invention is not an ion exchange resin.

As regards the composition of the madder root extract the following may be remarked.

The composition comprises alizarin, e.g., in an amount of 30 to 500 mg/kg more specifically in an amount of 60 to 300 mg/kg, depending on the source of the madder root, and on the extraction process.
The composition comprises at least one of rubiadin or lucidin.
For example, rubiadin may generally be present in an amount of 0.5 to 500 mg/kg, more specifically in an amount of 2 to 100 mg/kg, e.g., in an amount of 5-50 mg/kg, calculated on the extract.
Whether or not lucidin is present in the madder root extract to be treated via the process according to the invention will depend on its manufacturing method, as will be discussed in more detail below. Therefore, lucidin may be present in an amount of 0-1000 mg/kg. It is preferred for lucidin to be present in an amount of 0-500 mg/kg, in particular 0-50 mg/kg.
The composition may further contain additional related coloring agents, such as related anthraquinone compounds. Their presence or absence is not relevant to the process according to the invention.

It is preferred for the extract used as starting material to contain less than 15 wt.%, preferably less than 10 wt.%, more preferably less than 5 wt.%, in particular less than 2 wt.%, of C1-C5 alcohols, e.g., ethanol, as it has been found that these compounds may interfere with the adsorption of rubiadin and lucidin onto the polystyrene resin. As C1-C5 alcohols, in particular ethanol, are sometimes used in the manufacture of madder root extracts, this is a pertinent parameter to take into account. If these compounds are used in the extraction process, their concentration can be reduced by evaporation. In general, the presence of compounds which give desorption of rubiadin and lucidin are to be avoided.

Further components that may be present in the madder root extract will depend on the extraction process. This will be discussed in more detail below.

The madder root extract used in the process according to the invention has a pH of at least 8. It has been found that if the pH of the extract as it is provided to the polystyrene resin is below 8, removal of lucidin and rubiadin will not effectively take place, because the solubility of these compounds is limited at this pH.
It is preferred for the pH of the extract to be at least 8.5, more specifically at least 9, still more specifically at least 9.5, more in particular at least 10.
The maximum pH is not critical, but pH values above 12 are expected not to give additional benefit, while they may generate a corrosive environment. Accordingly, it may be preferred for the pH of the madder root extract as it is contacted with the polystyrene-based resin to be less than 12. It is preferred for the pH to be between 10 and 11.

The madder root extract as it is provided to the resin will have a pH in the stipulated range. If necessary, pH adjustment to a value in this range can be carried out in manners known in the art. For example, pH adjustment can be carried out using a solution of a base, e.g., an alkali metal hydroxide solution, specifically a solution of NaOH or KOH.

The step of contacting the madder root extract with the polystyrene-based resin can be carried out by methods known in the art. In one embodiment the extract is contacted with the polystyrene-based resin in a stirred tank reactor for a period of time sufficient to ensure adsorption of the rubiadin and/or lucidin contaminants which are present. In another embodiment, the polystyrene-based resin is present in an adsorption column, with extract provided to one end of the column, and purified extract being withdrawn from the end of the column. The use of an adoption column is considered preferred. This is because the use of stirred tank may lead to the adsorption of larger amounts of alizarin, which is not desired.

Temperature and pressure during the contacting step are not critical.
The temperature will generally be in the range of 0-100°C, as working outside this range is impractical for water-based systems. The temperature conveniently is in the range of 10-80°C, more specifically in the range of 10-50°C.
The pressure during the contacting step generally is in the range of 1-10 bar. When use is made of a column, overpressure may be applied to increase the velocity with which the extract flows through the column. Selection of a suitable pressure for column adsorption is within the scope of the skilled person and requires no further elucidation. For stirred tank adsorption pressure is not critical, and atmospheric pressure is suitable.
The contact time between the resin and the extract should be selected sufficiently long to allow adsorption of rubiadin and/or lucidin. When the contacting time is overly long, the adsorption of rubiadin and lucidin will not be improved, while processing time will be affected. It is within the scope of the skilled person to determine a suitable operating time. As a general range, a value between 1 minute and 64 hours, in particular between 30 minutes and 14 hours may be mentioned.

After the contacting step, an extract from which contaminants selected from rubiadin and lucidin have been removed is recovered.
In one embodiment, the concentration of contaminants selected from rubiadin and lucidin in the purified extract is at most 25% of the concentration of contaminants selected from rubiadin and lucidin in the medium before extraction, in particular at most 20%, more in particular at most 10%, still more in particular at most 5%.
In one embodiment the concentration of the total of rubiadin and lucidin in the purified extract is below 100 mg/kg, in particular below 50 mg/kg, more in particular below 30 mg/kg, calculated on the extract.

In the following, various methods will be discussed via which the madder root extract used as starting material in the present invention may be prepared.

In one embodiment, the madder root extract used as starting material can be obtained by a process comprising the steps of
- providing plant material to be extracted in particulate form,
- contacting the particulate plant material with an aqueous medium to form a slurry of particulate plant material in the aqueous medium, and
- holding the slurry for a period of at least 5 minutes.

The starting material is madder root, which may be fresh or dried. The first step generally is reducing the particle size of the madder root to a size where extraction can be carried out The provision of the plant material in particulate form can be carried out by methods known in the art, including washing, drying, and cutting or grinding. The particulate material generally has a particle size below 30 mm, more specifically below 20 mm, more specifically below 10 mm, although much smaller particle sizes may also be used. Although the minimum particle size is not critical, an average particle size of at least 0.1 mm may be mentioned as a general value for a lower limit. The suitable particle size depends on extraction efficiency, which is improved with smaller particle size, the costs associated with particle size reduction, and engineering considerations, like available apparatus and the viscosity of the medium to be processed. It is within the scope of the skilled person to determine a suitable particle size.

The madder root in particulate form is then contacted with an aqueous medium to form a slurry.
The amount of aqueous medium is not critical. On the one hand, enough medium is added to ensure that a processable slurry is obtained. On the other hand, the addition of very large amounts of aqueous medium is to be avoided as it will lead to large waste streams. In one embodiment, the aqueous medium is provided in such an amount that the weight ratio of plant material to aqueous medium is in the range of 1:5 to 1:30, in particular 1:5 to 1:15.
The aqueous medium generally is water, although the presence of other components is not necessarily excluded. In one embodiment it may be preferred for the aqueous medium to have an organic solvent content of less than 15 wt.%, preferably less than 10 wt.%, more preferably less than 5 wt.%, in particular less than 2 wt.%.

The slurry is subjected to a holding step for a period of at least 5 minutes. In the holding step, the dye compounds, which are present in the plant material in the form of glycosides are hydrolysed by enzymes in the plant, to release the dye compounds. This process can be indicated as endogenous liquefaction, or enzymatic endogenous conversion.

The temperature during the holding step should be such that it does not interfere with the endogenous liquefaction process. The temperature generally is below 75°C, in particular below 70°C, more in particular below 65°C. The minimum temperature is less critical, although lower temperatures may require longer holding times. A temperature of at least 5°C is generally suitable. In one embodiment, the temperature is selected in the range of 15-40°C.

The pH during the holding step is not critical, and may, e.g., be in the range of 4-10, in particular 5-9. Operating in a pH range of 6-8, in particular 6-7 is considered advantageous, because this has been found to be optimal for the endogenous liquefaction. Additionally, working at a pH of 6-7 means that water can be used in preparing the slurry. Addition of acid, base, or salt can be dispensed with.

Suitable time frames for the holding step can vary within wide ranges, and will depend on the process conditions (pH, temperature, reactor volume, whether or not the medium is agitated, etc.). The minimum time depends on the time required to effect the desired degree of endogenous liquefaction. On the other hand, once a suitable degree of endogenous liquefaction has been obtained, further holding may not be required. Holding time is at least 5 minutes, in particular at least 30 minutes, more specifically at least 1 hour. For large scale reactors, e.g., above 50 liter, or low temperatures, e.g., 0-15°C, much longer holding times may be mentioned, e.g., at least 4 hours, or at least 10 hours. Holding times above 48 hours are generally not required. For reasons of processing efficiency a holding time of at most 24 hours may be preferred.

It is preferred for the holding step to be carried out under agitation, e.g., stirring or shaking as this will increase the interaction between the medium and the plant material, and stimulates the endogenous liquefaction process.

It may be preferred for the holding step to be carried out in the presence of oxygen. Oxygen can be provided to the reaction mixture by stirring or by more intensive means like bubbling an oxygen-containing gas, e.g., air, though the reaction mixture, and/or by the provision of oxygen-generating compounds such as H₂O₂. The background to this is a follows:
For madder root, an important dye compound is alizarin or 1,2-dihydroxyanthraquinone. Alizarin occurs in madder root as its glycoside, ruberythric acid. During the holding step, ruberythric acid is hydrolysed to form alizarin by cleaving off the disaccharide group, which step is indicated as endogenous liquefaction. In addition to ruberythric acid, madder root comprises another glycoside, namely lucidin primeveroside, which contains the same disaccharide as ruberythric acid. During the holding step, lucidin primeveroside can be hydrolysed to form lucidin, which is a known mutagenic agent. It has been found that if the holding step is carried out in the presence of oxygen, enzymes in the madder root convert lucidin primeveroside to non-mutagenic nordamnacanthal rather than to mutagenic lucidin. While lucidin can also be removed from the extract using a polystyrene-based resin in accordance with the invention, it may be preferred to reduce the amount of lucidin present in the extract beforehand, by carrying out the holding step in in the presence of oxygen, provided, e.g., by stirring, or by the other means described above.

The product of the liquefaction/holding steps described above can be contacted with the polystyrene-based resin as described above, after pH adjustment if the pH is not at a value of at least 8 as required by the process according to the invention.
Generally, the product will first be subjected to solid-liquid separation before being contacted with the polystyrene-based resin. The solid-liquid separation step can be carried out in manners known in the art, e.g., via filtration, centrifugation, decantation, or combinations thereof. Centrifugation may be preferred. It is within the scope of the skilled person to select suitable separation conditions.

While it is possible to subject the product of the holding step directly to treatment with the polystyrene-based resin, it may be preferred to first subject the product from the holding step, before any solid-liquid separation) to further treatment, to obtain a higher-quality extract. This results in more efficient purification.

Therefore, in one embodiment, the product from the holding step is subjected to a process comprising the further steps of:
- if the pH of the slurry after the holding step is 5 or higher, adapting the pH of the slurry to a value of below 5,
- aging the slurry for a period of at least 5 minutes,
- subjecting the aged slurry to a solid-liquid separation step to form a solid plant material fraction and a first aqueous liquid fraction,
- contacting the solid fraction resulting from the solid-liquid separation step with an aqueous medium to form a further slurry with a pH of at least 8,
- subjecting the further slurry to a solid-liquid separation step to form a solid plant material fraction and a dye preparation second aqueous liquid fraction.

In this embodiment of the present invention, once the holding step has been completed, the next step in the process is adapting the pH of the slurry to a value below 5, if the pH is not already at a value of below 5.
It has been found that adjustment to a value below 5 makes for an efficient process with low dye loss in the subsequent solid-liquid separation steps. It may be preferred to adjust the pH to a value below 4.5. Decreasing the pH to very low value will not improve the results of the process, and will require the addition of further acid. It may therefore be preferred for the pH to be adjusted to a value within the range of 2 to 5, in particular 2 to 4.5, more in particular 3 to 4.5.
Adjustment of the pH can be carried out using suitable acids. Suitable acids include strong inorganic acids like HCl, HNO3, and H2SO4, and organic acids like formic acid and acetic acid. The use of strong acids has the advantage that a substantial decrease in pH can be obtained while adding limited volumes of liquid. The use of inorganic acids is considered preferred.

After the pH adjustment step, the slurry is subjected to an aging step for a period of at least 5 minutes.
Not wishing to be bound by theory it is believed that aging the slurry at a pH below 5 will ensure that the dye compounds will be retained in the solid phase in the subsequent solid-liquid separation step.
The aging step is carried out for a period of at least 5 minutes. A longer aging step may result in more dye compounds ending up in the solid phase after the solid-liquid separation. Not wishing to be bound by theory it is believed that this may be caused by the dye being present in larger particles, by association of the dye molecules with themselves, or by association with other solid compounds. It is therefore preferred to carry out the aging step for a period of at least 1 hour, in particular at least 4 hours, more in particular at least 8 hours. Aging times above 48 hours are generally not required. For reasons of processing efficiency an aging time of at most 24 hours may be preferred.
It is preferred for the aging step to be carried out without agitation, e.g., stirring or shaking, of the slurry. It is believed that agitation may interfere with the agglomeration process mentioned above. Therefore, not applying agitation is believed to result in a higher dye yield in the solid phase obtained during the solid-liquid separation step which follows the aging step.
The temperature during the aging step is not critical. it generally is below 75°C, in particular below 70°C, more in particular below 65°C. The minimum temperature is above 0°C, but otherwise not critical. A temperature of at least 5°C is generally suitable. In one embodiment, the temperature is selected in the range of 15-40°C.

After the aging step, the slurry is subjected to a solid-liquid separation step to form a solid plant material fraction and a first aqueous liquid fraction. The solid-liquid separation step can be carried out in manners known in the art, e.g., via filtration, centrifugation, decantation, or combinations thereof. Centrifugation may be preferred. It is within the scope of the skilled person to select suitable separation conditions.

In the solid-liquid separation step a liquid fraction is obtained which contains soluble plant material, in particular substantial amounts of sugars and soluble salts, but limited amounts of dye components, as the low pH ensures that these are in the solid state, and thus retained in the solid fraction. The liquid fraction can be processed as desired.

The solid fraction contains solid plant materials, and the major part of the dye components. By proper selection of the pH and the solid/liquid separation conditions the loss of dye to the liquid fraction can be minimized.

If so desired, the solid fraction may be subjected to a washing step. This can be done in manners known in the art. It is preferred for the washing step to be carried out with an aqueous liquid with a pH below 5, to prevent inadvertent removal of dye from the system. The preferred pH ranges given above for the slurry also apply to the washing liquid.

In one embodiment, the solid fraction resulting from the solid-liquid separation step is then contacted with an aqueous medium to form a second slurry with a pH of at least 8.
The provision of a second slurry with a pH of at least 8 can be carried out in a single step, by contacting the solid plant material fraction with an aqueous medium with a high pH, in particular a pH of at least 8, or in two steps, by contacting the solid plant material fraction with an aqueous medium, and then adjusting the pH of the slurry to a value above 8. The use of a two-step process is considered preferred, as this makes for better pH control.

Depending on whether the step of forming a slurry with a high pH is performed in one step or two steps, the aqueous medium may, e.g., be water (if subsequent pH adjustment is effected, or a solution with a high pH). In both cases, the presence of other components is not necessarily excluded.
The amount of aqueous medium is not critical. On the one hand, enough medium is added to ensure that a processable slurry is obtained. On the other hand, the addition of very large amounts of aqueous medium is to be avoided as it will lead to large waste streams. In one embodiment, the aqueous medium is provided in such an amount that the weight ratio of plant material to aqueous medium is in the range of 1:5 to 1:30, in particular 1:10 to 1:20.

The pH of the second slurry is set at a value of at least 8. This can be done, e.g., using strong inorganic bases such as NaOH or KOH. The use of strong inorganic bases with a monovalent cation is considered preferred, because they allow a high pH to be obtained without addition of much liquid.
The pH of the slurry is set at a value of at least 8. It has been found that if the pH of the slurry is below 8, the yield of colour compounds in the dye extract will be reduced. Not wishing to be bound by theory, it is believed that this is caused by the color compounds having a low solubility at a pH of below 8.
It is preferred for the pH of the slurry to be at least 8.5, more specifically at least 9, still more specifically at least 9.5, more in particular at least 10.
The maximum pH is not critical, but pH values above 12 are expected not to give additional benefit, while they may generate a corrosive environment, and will require the use of additional base. Accordingly, it may be preferred for the pH of the slurry to be set at less than 12, or less than 11. It may be preferred for the pH to be set between 10 and 11.

When the pH of the second slurry has been set to the desired value, a second solid/liquid separation step takes place. As for the previous solid-liquid separation step, the solid-liquid separation step can be carried out in manners known in the art, e.g., via filtration, centrifugation, decantation, or combinations thereof. Centrifugation may be preferred. It is within the scope of the skilled person to select suitable separation conditions.

If so desired, the solid fraction may be subjected to a washing step. This can be done in manners known in the art. It is preferred for the washing step to be carried out with an aqueous liquid with a pH above 8, to prevent inadvertent removal of dye from the system. The preferred pH ranges given above for the slurry also apply to the washing liquid.

The solid product of the solid-liquid separation step comprises fibrous plant material and further solid components. The dye components are mainly present in the liquid fraction. The solid components can be processed as desired.
The liquid product of the solid-liquid separation can be contacted with the polystyrene-based resin as described above.

Alternatively, the madder root extract used as starting material can be obtained by a process comprising the steps of
- providing plant material to be extracted in particulate form,
- contacting the particulate plant material with a solvent mixture comprising water and a polar volatile organic solvent to form a slurry of particulate plant material in the solvent mixture,
- holding the slurry for a period of at least 5 minutes, optionally at elevated temperature,
- subjecting the slurry to a solid/liquid separation step,
- subjecting the liquid fraction resulting from the solid/liquid separation step to an evaporation step to remove at least part of the polar volatile organic solvent, and ensuring that the pH of the medium is at least 8.
The thus obtained liquid can be provided to the polystyrene resin in accordance with the present invention.

In this process, alizarin, lucidin, rubiadin, and other anthraquinones are extracted from the plant material using a solvent mixture comprising water and a polar volatile organic solvent. After solid/liquid separation, the polar volatile organic solvent is removed at least in part, to prevent interference with the adsorption at the polystyrene resin. The process will be discussed in more detail below:

For the step of providing plant material to be extracted in particulate form, reference is made to what is stated above for this step.
The particulate plant material is contacted with a solvent mixture comprising water and a polar volatile organic solvent.
Within the present specification, a volatile organic solvent is a solvent with a boiling point below that of water, so that it can easily be removed through evaporation. A polar solvent is a solvent with a dielectric constant of at least 15. The solvents used with the present invention are miscible with water in the amount applied. It is within the scope of the skilled person to select a suitable solvent to extract the alizarin, and associated compounds, from the plant material.
Suitable solvents include alcohols, aldehydes, and ketones. C1-C6 alcohols are considered preferred, with ethanol being particularly preferred, for reasons of effectiveness and costs.
The solvent mixture comprises water and a polar volatile organic solvent. The volume ratio between water and polar volatile organic solvent generally is in the range of 10:90 to 90:10, more in particular in the range of 25:75 to 75:25, with 50:50 being particularly preferred.
For further information on the steps of contacting the particulate plant material with the solvent mixture to form a slurry, and the step of holding the slurry for a period of at least 5 minutes, reference is made to what is stated above for the analogous steps where an aqueous medium is used. It may be preferred for the holding step to be carried out at elevated temperature, e.g., between room temperature and reflux temperature. This improves the extraction.

After the holding step, the slurry is subjected to a solid/liquid separation step. This step can be carried out in the same manner as described above.

The liquid fraction resulting from the solid/liquid separation is subjected step to an evaporation step to remove at least part of the polar volatile organic solvent, and to a step to ensure that the pH of the medium is at least 8. Solvent removal is effected because the volatile organic solvent may interfere with the adsorption of the lucidin and/or rubiadin onto the polystyrene-based resin. Therefore, it is preferred for the volatile solvent to be evaporated to such an extent that the extract which is contacted with the polystyrene-based resin contains less than 15 wt.% of the polar volatile organic solvent. Preferably, the volatile solvent is evaporated to a solvent content of less than 10 wt.%, more preferably less than 5 wt.%, in particular less than 2 wt.%.
The pH adjustment step to a value above 8, or a more preferred value as described above, can be carried out as described above.
The thus obtained liquid can be provided to the polystyrene resin in accordance with the present invention.

It is noted that the various elements of the various embodiments of the process according to the invention can be combined, as will be clear to the skilled person.

The present invention will be elucidated with reference to the following examples, without being limited thereto or thereby.

### Example 1

### Starting materials

Dried and grinded (sieve 5 mm) madder root (Rubia tinctorum L.) was obtained from Rubia Natural Colours. Acetonitrile (HPLC grade), HiPerSolv Chromanorm water for HPLC, ammonium formate, formic acid, sodium diethylenediaminetetraacetic acid (EDTA), tetrahydrofuran, formic acid, NaOH pellets (pH. Eur. Prolabo) and HCl (37% pH. Eur. Prolabo) were purchased from VWR International B.V. (The Netherlands). Ethanol, 96% v/v was quality Cargill 65200 Pharma Agricultural Alcohol 96% (Cargill BV, Bergen op Zoom, The Netherlands). For all tests process water of °dH=4 was used.

A number of resins were tested, the properties of which are presented in Table 1 (manufacturer data).

**Table 1**

| resin | chemical nature | Surface area (m2/g) | pore size (Å) | density (g/cm3) | pore volume (ml/g) | particle size (mm) |
|---|---|---|---|---|---|---|
| XAD-4 | PS-DVB | 750 | 50 | 1.08 | 0.98 | 0.49-0.69 |
| XAD-16 | PS-DVB | 900 | 100 | 1.08 | 1.82 | 0.3-1.2 |
| SP-850 | PS-DVB | 930 | 45 | 0.70 | 1.1 | 0.25 |
| C18 | C18-silicagel | 518 | 60 | | | 0.005 |
| PBA | Ph-B-acid on silica | 500 | 60 | 2.5-3.5 | | 0.04 |

The resins XAD-4, XAD-16, and SP-850 are polystyrene-based resins in accordance with the present invention. C18 is a comparative resin, namely an octadecyl-functionalised silicagel. PBA is also a comparative resin, namely a resin comprising phenylboronic acid on silica.

The resins were pre-treated by sequential washing with demineralised water, 96% ethanol, and demineralised water. The hydrated resin was stored prior to use in a closed flask at 4°C. In the absorption experiments, equal amounts of resins, calculated on dry resin weight were used.

### Extraction of madder root - general procedure

Grinded and dried madder root was suspended in water (ratio solid:liquid 1:20 w/w). The pH of the mixture was 6-7. After stirring for 3 hours at room temperature, the suspension was brought to pH 4.3 using HCl in water (19%). After 30 minutes the suspension was centrifuged for 20 minutes at 5931 g at room temperature. The solid fraction was collected. The solid fraction was suspended in a 0,04M NaOH solution (ratio solid:liquid 1:20 w/w), which gives a start pH of 13,0. The suspension was stirred for 2 hours and centrifuged for 30 minutes at 5910 g at room temperature, to form an alkaline madder root extract.
Before the adsorption experiments, the pH of the extract was adjusted to 10.5, and the extract was centrifuged at 3316 g for 10 minutes. The liquid supernatant was subjected to the adsorption experiments described below.

### Adsorption experiments

Adsorption experiments were carried out as follows: 0.375 gram (dry weight)of hydrated resin was combined with 15 gram of the centrifuged extract prepared as described above (resin:extract 1:40 w/w).
Adsorption was carried out at room temperature in an orbital shaker at 300 rpm, and was carried out overnight. From all samples 1.5 mL sample was centrifuged at 8515 g for 5 minutes. From the filtrate 500 µL was diluted with 1500 µL of tetrahydrofuran-water-formic acid (1:1:0.05), and subjected to HPLC analysis.

Table 2 below gives the adsorption of alizarin and rubiadin on the various resins, expressed as percentage of the amount of alizarin and rubiadin present in the starting extract.

**Table 2**

| | Resin | % alizarin adsorbed | % rubiadin adsorbed |
|---|---|---|---|
| Example 1 | XAD-4 | 13 | 98 |
| Example 2 | XAD-16 | 27 | 99 |
| Example 3 | SP-850 | 21 | 99 |
| Comparative A | C18 | 16 | 73 |
| Comparative B | PBA | 20 | 33 |

From the results in table 2 it can be seen that the polystyrene-based resins of Examples 1-3 efficiently remove rubiadin from the extract. The resins of the comparative Examples A and B do not show this result.

### Example 2

A number of different madder root starting materials (obtained from Rubia Natural Colours) were treated as described in Example 1 to form extracts. The extracts were treated with XAD-16 or SP-850, both polystyrene resins, in accordance with the procedure described above.

Tables 3a and 3b below give the alizarin and rubiadin content of the starting samples, and the absorption percentage of the two compounds by the resins XAD-16 and SP-850.

**Table 3a: adsorption of alizarin and rubiadin by XAD-16**

| sample No. | alizarin (extract) mg/ | alizarin %adsorbed | rubiadin (extract) mg/g | rubiadin %adsorbed |
|---|---|---|---|---|
| 1 | 66.1 | 20 | 6.8 | 94 |
| 2 | 155.9 | 40 | 17.7 | 100 |
| 3 | 183.8 | 36 | 18.0 | 99 |
| 4 | 269.7 | 46 | 29.8 | 99 |
| 5 | 272.2 | 41 | 27.9 | 99 |

**Table 3b: adsorption of alizarin and rubiadin by SP850**

| sample No. | alizarin (extract) mg/ | alizarin %adsorbed | rubiadin (extract) mg/g | rubiadin %adsorbed |
|---|---|---|---|---|
| 1 | 66.1 | 14 | 6.8 | 94 |
| 2 | 155.9 | 25 | 17.7 | 99 |
| 3 | 183.8 | 28 | 18.0 | 98 |
| 4 | 269.7 | 31 | 29.8 | 99 |
| 5 | 272.2 | 26 | 27.9 | 98 |

As can be seen from the tables above both XAD-16 and SP-850 selectively remove rubiadin from the reaction mixture to a very large extent. SP850 is considered preferred, because it adsorbs less alizarin while the adsorption of rubiadin remains high.

## Claims

1. Method for preparing a purified madder root extract comprising the steps of providing a madder root extract comprising one or more contaminants selected from rubiadin and lucidin with a pH of at least 8, contacting the extract with a polystyrene-based resin, and recovering an extract from which contaminants selected from rubiadin and lucidin have been removed at least in part.

2. Method according to claim 1, wherein the polystyrene-based resin is based for at least 70 mol.% on the total of vinyl benzene monomers and, if present, divinyl benzene monomers, preferably at least 80 mol.%, more preferably at least 90 mol.%.

3. Method according to any one of the preceding claims, wherein the madder root extract used as starting comprises rubiadin, e.g., in an amount of 0.5 to 500 mg/kg, more specifically in an amount of 2 to 100 mg/kg, e.g., in an amount of 5-50 mg/kg, calculated on the extract.

4. Method according to any one of the preceding claims, wherein pH of the madder root extract is at least 8.5, more specifically at least 9, still more specifically at least 9.5, more in particular at least 10, and/or less than 12, in particular between 10 and 11.

5. Method according to any one of the preceding claims, wherein the concentration of contaminants selected from rubiadin and lucidin in the purified madder root extract is at most 25% of the concentration of contaminants selected from rubiadin and lucidin in the medium before extraction, in particular at most 20%, more in particular at most 10%, still more in particular at most 5%.

6. Method according to any one of the preceding claims, wherein the concentration of the total of rubiadin and lucidin in the purified extract is below 100 mg/kg, in particular below 50 mg/kg, more in particular below 30 mg/kg, calculated on the purified extract.

7. Method according to any one of the preceding claims, wherein the madder root extract used as starting material is obtained by a process comprising the steps of
- providing plant material to be extracted in particulate form,
- contacting the particulate plant material with an aqueous medium to form a slurry of particulate plant material in the aqueous medium, and
- holding the slurry for a period of at least 5 minutes.

8. Method according to claim 7, wherein oxygen is provided to the reaction medium during the holding step.

9. Method according to claim 7 or 8, wherein the product from the holding step is the product from the holding step is subjected to a process comprising the further steps of:
- if the pH of the slurry after the holding step is 5 or higher, adapting the pH of the slurry to a value of below 5,
- aging the slurry for a period of at least 5 minutes,
- subjecting the aged slurry to a solid-liquid separation step to form a solid plant material fraction and a first aqueous liquid fraction,
- contacting the solid fraction resulting from the solid-liquid separation step with an aqueous medium to form a further slurry with a pH of at least 8,
- subjecting the further slurry to a solid-liquid separation step to form a solid plant material fraction and a dye preparation second aqueous liquid fraction.

10. Method according to claim 9, wherein after the holding step the pH is adjusted to a value within the range of 2 to 5, in particular 2 to 4.5, more in particular 3 to 4.5.

11. Method according to any one of the preceding claims 1-6, wherein the madder root extract used as starting material is obtained by a process comprising the steps of
- providing plant material to be extracted in particulate form,
- contacting the particulate plant material with a solvent mixture comprising water and a polar volatile organic solvent to form a slurry of particulate plant material in the solvent mixture,
- holding the slurry for a period of at least 5 minutes,
- subjecting the slurry to a solid/liquid separation step,
- subjecting the liquid fraction resulting from the solid/liquid separation step to an evaporation step to remove at least part of the polar volatile organic solvent, and ensuring that the pH of the medium is at least 8.
